# EUROPEAN PATENT SPECIFICATION

(11) **EP 0 956 084 B1**
(45) Date of publication and mention of the grant of the patent: **05.04.2006**
(21) Application number: 97904755.2
(22) Date of filing: 17.01.1997
(51) Int. Cl.: A61M 37/00, A61C 5/06

(54) **FIBER-ENDED OPEN ORIFICE DELIVERY TIP**
ABGABESPITZE MIT OFFENER ÖFFNUNG UND FASERENDE
POINTE D'APPORT D'UNE COMPOSITION DENTAIRE AYANT UN ORIFICE OUVERT ET UNE EXTREMITE A FIBRE

(30) Priority: 19.01.1996 US 589122
(43) Date of publication of application: 17.11.1999
(73) Proprietor: Ultradent Products, Inc., South Jordan, Utah 84095 (US)
(72) Inventor: FISCHER, Dan, E., Sandy, UT 84093 (US); FISCHER, David, V., West Jordan, UT 84088 (US); JENSEN, Steven, D., Midvale, UT 84047 (US)
(74) Representative: Orr, William McLean
(86) International application number: PCT/US1997/000531
(87) International publication number: WO 1997/026041

(56) References cited:
- EP-A- 0 582 361
- FR-A- 2 288 495
- GB-A- 2 203 636
- US-A- 767 469
- US-A- 4 199 270
- US-A- 4 997 371
- US-A- 5 246 371
- US-A- 5 286 257

## Description

The present invention relates to an apparatus and method for delivering a dental composition to a tooth surface. More particularly, the present invention is directed to a hand operated delivery device having a fiber-ended delivery tip capable of dispensing a dental composition directly onto a tooth surface.

The development of modem instrumentation and materials, together with increased public awareness of the desirability of tooth preservation, have made cast restorations vital and frequently used elements in restorative and reconstructive prosthodontics dentistry. For years dentists have relied on indirect cast restorations such as crowns to maximize function, integrity, and aesthetics for compromised teeth. A primary step during cast restoration procedures is taking impressions of teeth for reconstruction.

There are many important dental compositions that need to be efficiently delivered to tooth surfaces during dental restorative procedures. Such dental compositions include hemostatic agents, etchants, bonding agents, disinfectants, sealants, and for indirect impression making, impression materials.

An apparatus for delivering a dental composition to tooth surfaces is disclosed in U.S. Patent No. 4,997,371 which corresponds to the basis of the preambul of claim 1. The apparatus includes a syringe-type dispenser for holding a quantity of the dental composition and a removable applicator tip having bristles disposed within the passageway at the distal end of the tip. The bristles are held by the applicator tip primarily by the frictional grip that occurs at the distal end of the tip. Another apparatus for delivering dental compositions is disclosed in U.S. Patent No. 5,269,684. This apparatus has a removable applicator tip with adjustable bristles disposed within the distal end of the tip. The bristles are slidably secured in a spiral passageway formed by a helical ridge inside the delivery tip. FR-A-2288495 discloses a delivery tip with bristles occupying a secondary lumen adjacent to the discharge lumen.

The application of some dental compositions to tooth surfaces using prior bristle brush tips can be difficult because some compositions are highly viscous. For example, it is nearly impossible to deliver impression materials with prior applicator tips since the resistance to flow is simply too great. Delivery of an impression material using these prior applicator tips is not effective since the bristles disposed within the passageway of the tips tend to choke off the tips, thus preventing flow of the impression material. Attempting to force the flow of the impression material or other highly viscous materials through a prior brush applicator tip may actually cause the fibers to be pushed out, expelling undesired quantities of the material into a patient's mouth.

In addition, the positioning of the bristles within the passageway of prior applicator tips causes the bristles to act as a filter, particularly with respect to any filler particles that are contained in the dental composition. Such filtering may change the physical properties of the dental composition as it is delivered to the tooth surface.

Another problem that can occur if one is applying an impression material to tooth surfaces with a conventional delivery device is that air bubbles remain entrapped within the impression material, particularly when a syringe is used in dispensing the impression material. Impression materials are formed from a base material that is mixed with a catalyst material. When the base material and catalyst material are mixed together, air bubbles are formed in the resulting impression material used to make a cast mold of teeth. These air bubbles can prevent complete reproduction of detail in the impression material, resulting in a poor cast mold of the teeth. The impression material is only useable for a few minutes once the base material and the catalyst material have been mixed, so it is important to remove entrapped air bubbles as soon as possible. In conventional delivery methods, after a quantity of impression material has been delivered around the prepared tooth, an air syringe is sometimes used to blow against the impression material. This helps to break up entrapped bubbles, but this is not always predictable and can result in additional air bubbles becoming entrapped in the impression material. In addition, time is wasted addressing this step while working time of the impression material is passing.

Accordingly, there is a need for an improved delivery tip that overcomes the above problems.

### SUMMARY OF THE INVENTION

The present invention is directed to a delivery tip for applying a dental composition to a tooth surface. The delivery tip includes a tubular member having a proximal end and a distal end. A coupling means, such as a threaded portion or a luer lock connector, is located on the proximal end of the tubular member for releasably attaching the tubular member to a delivery device for the dental composition.

In a first embodiment of the delivery tip, a plurality of fibrous bristles are disposed on an outer periphery such as the outer surface and/or rim at the distal end of the tubular member. The fibrous bristles are attached to the outer periphery of the delivery tip so that a passageway extends through the delivery tip without interference from the fibrous bristles. The fibrous bristles surround the outer surface and/or rim of the delivery tip adjacent to the distal end thereof, with at least a portion of the bristles extending a predetermined distance beyond the distal end.

The delivery tip of the present invention is particularly useful on a delivery device for dispensing dental compositions used in dental restorative procedures such as impression materials, bonding agents, sealants, and the like. Preferably, the delivery tip is made from a chemically inert material with respect to the dental compositions.

The construction of the delivery tip with an open passageway free from fibrous bristles permits a free flow of the composition through the passageway of the delivery tip without interference from the bristles, thus preventing clogging of the tip. The fibrous bristles of the delivery tip permit an agitating action to remove air bubbles from the applied dental composition such as an impression material, reducing the amount of air entrapped within the impression material. The stimulation provided by the fibrous bristles also results in better adaptation of the impression material around tooth surfaces. The bristles may also be used in a brushing or scrubbing action, which is advantageous for working other dental compositions into the tissues.

An apparatus for controlled delivery of a dental composition to a tooth surface includes a delivery device having the delivery tip of the present invention attached thereto. The delivery device includes a reservoir means for holding a quantity of the dental composition. The delivery tip is in fluid communication with the reservoir means at the proximal end of the delivery tip. A means for controlled dispensing of the dental composition from the reservoir means to the distal end of the delivery tip in order to control the flow of the dental composition onto the tooth surface is also provided. The reservoir means is preferably a hollow syringe barrel, while the controlled dispensing means is preferably a plunger slidably disposed within the syringe barrel. The delivery tip can be releasably or permanently attached to the reservoir means.

A method for delivery of a dental composition to a tooth surface using the delivery tip of the present invention includes the following steps. First, a quantity of the dental composition is loaded and held in a reservoir such as a syringe barrel. The dental composition is then delivered from the reservoir into the delivery tip coupled to the reservoir, and applied onto the tooth surface through the delivery tip. The dental composition can be agitated on the tooth surface with the fibrous bristles of the delivery tip to remove entrapped air bubbles. The fibrous bristles can also be used to coat and spread the dispensed composition on tooth surfaces.

The present invention has been developed in response to the present state of the art and, in particular, in response to problems and needs that have not been fully or completely solved by currently available dispensing devices.

### BRIEF DESCRIPTION OF THE DRAWINGS

In order to more fully understand the manner in which the above-recited and other advantages and objects of the invention are obtained, a more particular description of the invention briefly described above will be rendered by reference to specific embodiments thereof which are illustrated in the appended drawings. Understanding that these drawings depict only typical embodiments of the invention and are not to be considered limiting of its scope, the invention will be described and explained with additional specificity and detail through the use of the accompanying drawings in which:
Figure 1 is a perspective view of a first embodiment of the delivery tip of the present invention;
Figure 2A is a longitudinal cross-sectional view of the delivery tip of Figure 1 taken along lines 2-2;
Figure 2B is a longitudinal cross-sectional view of an alternative embodiment of the delivery tip of Figure 1;
Figure 3 is an enlarged end view of the delivery tip of Figure 1;
Figure 4 is an exploded perspective view of the delivery tip of Figure 1 and a syringe apparatus that can be used therewith;
Figure 5 is a perspective view of the delivery tip and syringe apparatus of Figure 4 in an assembled condition;
Figure 6 is a perspective view of the syringe apparatus of Figure 5 with the delivery tip replaced by a cap;
Figure 7 is a perspective view of an example of a delivery tip not forming part of the invention.
Figure 8A is a longitudinal cross-sectional view of the delivery tip of Figure 7 taken along lines 8-8;
Figure 8B is a longitudinal cross-sectional view of an alternative example of a delivery tip of Figure 7;
Figure 9 is an enlarged end view of the delivery tip of Figure 7;
Figure 10 is an exploded perspective view of the delivery tip of Figure 7 and a syringe apparatus that can be used therewith; and
Figure 11 is a perspective view of the delivery tip and syringe apparatus of Figure 10 in an assembled condition.

### DETAILED DESCRIPTION OF THE PREFERRED EMBODIMENTS

The present invention is directed to a delivery tip for applying a dental composition to a tooth surface. In a first embodiment, the delivery tip includes a tubular member with a plurality of fibrous bristles disposed on an outer periphery of the tip, such as the outer surface and/or distal rim at the distal end of the tubular member. In a second embodiment, the tubular member of the delivery tip has a passageway divided into a first lumen and a second lumen by an interior partition wall disposed longitudinally within the passageway, with the first lumen being open at the distal end. A plurality of fibrous bristles are disposed within the second lumen and extend from the distal end of the tubular member. The invention is also directed to an apparatus for controlled delivery of a dental composition to a tooth surface. The apparatus includes a delivery device having the delivery tip of the present invention attached thereto.

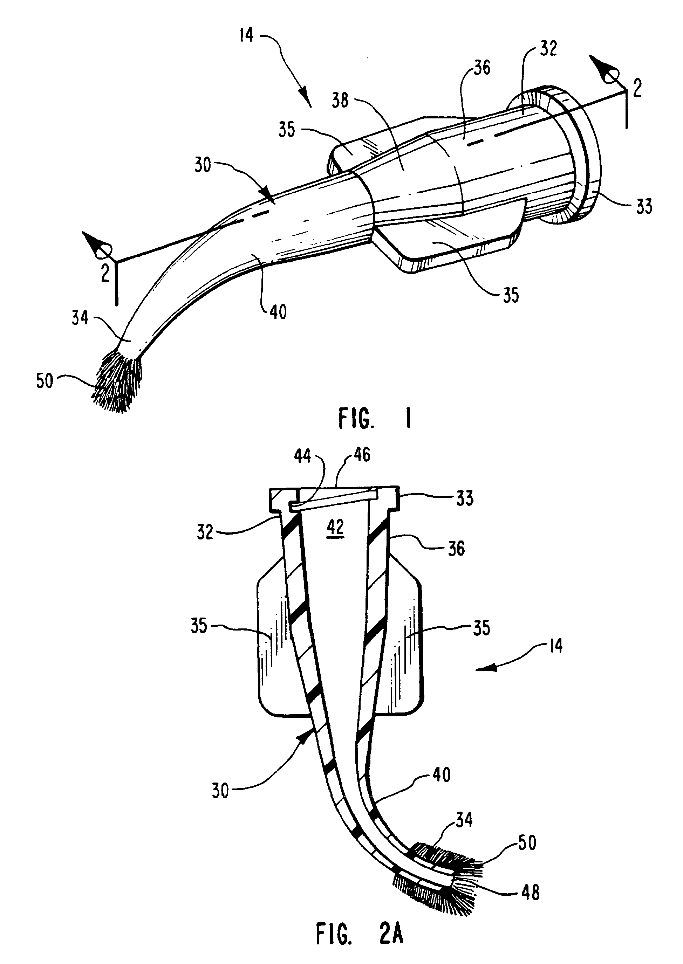

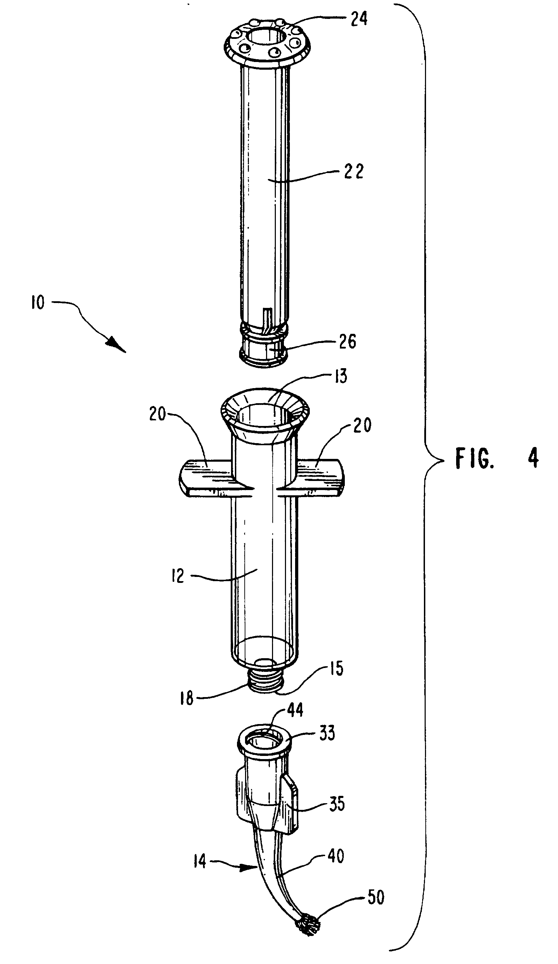

Referring to the drawings, where like parts are designated with like numerals throughout, Figures 1-3 illustrate the preferred embodiments of the delivery tip according to the present invention. Figures 4-6 and 10-11 illustrate preferred delivery devices in the form of syringes that can be used with the delivery tip of the invention.

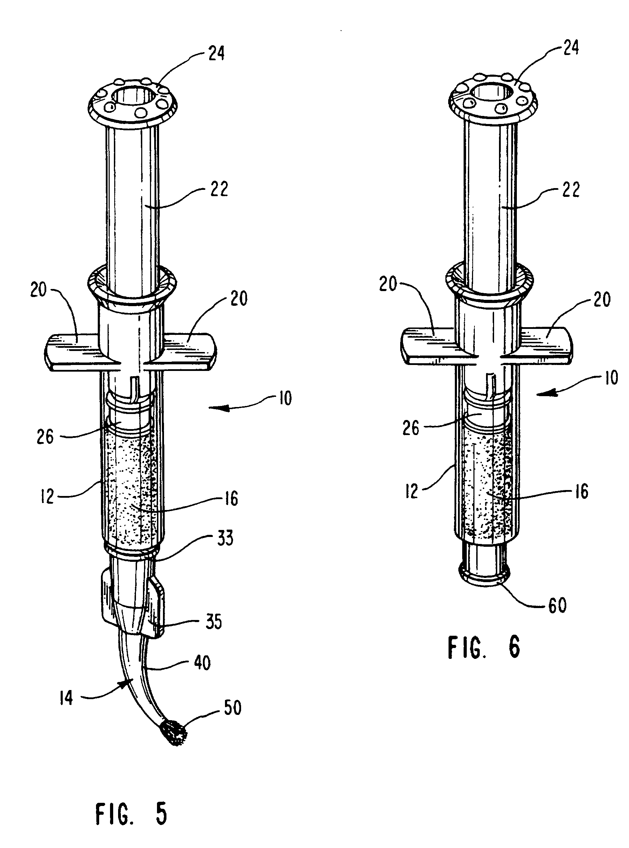

Turning first to Figure 4, an exploded perspective view of a delivery device in the form of a syringe 10, and a delivery tip 14 are illustrated according to a first embodiment of the invention. The syringe 10 includes a reservoir means for holding a quantity of the dental composition. A preferred embodiment of the reservoir means is a hollow syringe barrel 12. The syringe barrel 12 has a loading end 13 and a discharge end 15. The syringe barrel 12 is generally cylindrical in shape and is adapted for holding a quantity of a dental composition 16, as shown in Figures 5 and 6. The dental composition 16 can be dental impression materials, hydrophilic bonding agents, sealing agents, antimicrobial agents, etching agents, hydrophobic resins, flowable composites, pot and fissure sealants, and the like.

A pair of finger flanges 20 protrude from the outer surface of syringe barrel 12, which aid in gripping barrel 12 while dispensing composition 16. The outer surface of syringe barrel 12 can also be provided with gradient markings (not shown) to aid in dispensing a precise amount of composition 16.

The syringe 10 also includes a means for controlled dispensing of the dental composition from the reservoir means to the distal end of delivery tip 14 in order to control the flow of the dental composition onto tooth surfaces. In a preferred embodiment, the controlled dispensing means is a plunger 22 that is longitudinally slidable within syringe barrel 12. The plunger 22 has a circular flange 24 at the outer end thereof. A plunger head 26 is disposed at the opposite end of plunger 22 from circular flange 24. The plunger head 26 is constructed of a resilient material such that the outer edge of plunger head 26 is contiguous with the inner wall of syringe barrel 12. In addition, plunger head 26 is preferably constructed of a material that is nonreactive with the dental composition. Markings may be placed on plunger 22 to identify the volume of dental composition used or remaining.

The discharge end 15 of syringe barrel 12 includes a coupling means for attaching delivery tip 14 to syringe 10. The coupling means includes in one preferred embodiment a syringe threaded portion 18 that is complementary with a corresponding tip threaded portion 44 on delivery tip 14 as discussed in greater detail below. Other means may be used to attach delivery tip 14 to syringe barrel 12, which will also be discussed in further detail below.

It will be appreciated that other means may be used to control dispensing of a dental composition onto a tooth surface. For example, the delivery tip of the invention may be adapted for capsule use or for squeeze bulb use.

Figures 1-3 illustrate delivery tip 14 in greater detail. The delivery tip 14 includes a tubular member 30 having a proximal end 32 and a distal end 34. The tubular member 30 includes a cylindrical hub 36 toward proximal end 32, and a tapered nozzle 40 toward distal end 34. A conical section 38 is disposed between and integrally formed with hub 36 and nozzle 40. The outer diameter of delivery tip 14 thus gradually decreases in size from proximal end 32 to distal end 34. The nozzle 40 may be curved as shown, or straight. Preferably, nozzle 40 is curved toward distal end 34 to facilitate application of a dental composition to hard-to-reach tooth surfaces.

A pair of fins 35 protrude from the outer surface of tubular member 30. The fins 35 provide convenience in attaching delivery tip 14 onto syringe barrel 12. A circular lip 33 surrounds the outer periphery of delivery tip 14 at proximal end 32. The lip 33 provides a fluid sealing surface to prevent leakage of composition 16 when delivery tip 14 is coupled to syringe barrel 12.

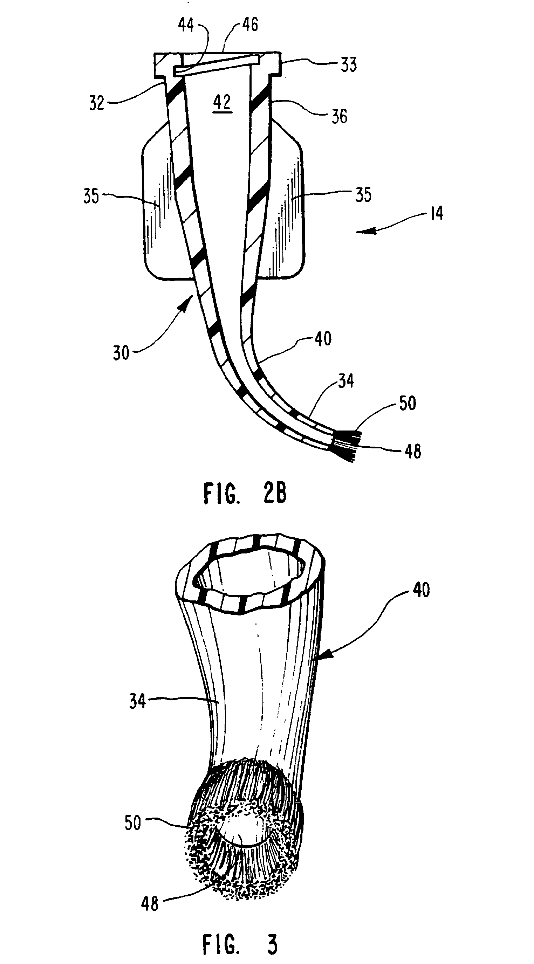

A coupling means for detachably coupling delivery tip 14 to syringe barrel 12 is provided at proximal end 32 of tubular member 30. One presently preferred embodiment of the coupling means includes tip threaded portion 44 formed of female threads on the interior surface of delivery tip 14 at proximal end 32. The tip threaded portion 44 is shown in Figures 2A, 2B and 4. The tip threaded portion 44 can be coupled with complementary syringe threaded portion 18 formed with male threads on discharge end 15 of syringe barrel 12.

It will be appreciated that the coupling means can be implemented using various other equivalent structures and be within the intended scope of the invention. For example, delivery tip 14 could be formed with male threads at proximal end 32 and discharge end 15 of syringe barrel 12 could be formed with complementary female threads. In addition, delivery tip 14 could be detachably coupled to syringe barrel 12 by way of a luer lock attachment in which delivery tip 14 utilizes a female luer connector and discharge end 15 of syringe barrel 12 uses a male luer connector or vice versa. Another connection arrangement that could be used is a press fit attachment of delivery tip 14 to syringe barrel 12. Any connection arrangement can be used such that delivery tip 14 detachably couples to discharge end 15 of syringe barrel 12.

While in the embodiments illustrated, delivery tip 14 is removable, it is possible in an alternative embodiment within the scope of the present invention to permanently secure delivery tip 14 to syringe barrel 12. Thus, delivery tip 14 may be integrally molded as part of syringe barrel 12 or may irreversibly snap onto syringe barrel 12. In such an embodiment, syringe barrel 12 could be configured to hold only a sufficient quantity of a dental composition for a single application. Thereafter, the device could be discarded.

As illustrated in Figures 2A and 2B, the interior of delivery tip 14 forms a tapered passageway 42. The passageway 42 narrows from an inlet orifice 46 at proximal end 32 toward an outlet orifice 48 at distal end 34. The passageway 42 can be formed with any desired cross-sectional shape, such as circular, elliptical, square, rectangular, or polygonal. As depicted in Figures 2A and 3, a plurality of fibrous bristles 50 are disposed around the outer periphery including on the outer surface and distal rim of nozzle 40 at distal end 34 of delivery tip 14. The fibrous bristles 50 are disposed on and surround the outer surface and distal rim of nozzle 40 so as not to obstruct outlet orifice 48 of delivery tip 14. In the alternative embodiment shown in Figure 2B, fibrous bristles 50 are disposed on and around only the distal rim of distal end 34.

While Figure 3 depicts fibrous bristles 50 as completely surrounding the outer periphery of nozzle 40 at distal end 34, it is possible that fiber bristles could be disposed on delivery tip 14 in other ways. For example, fiber bristles could be disposed in spaced apart clumps around the outer periphery of nozzle 40 at distal end 34.

At least a portion of fibrous bristles 50 extend a predetermined distance beyond the distal rim surrounding outlet orifice 48 of delivery tip 14 at distal end 34. Such a distance can be in the range from about 0.3 mm to about 3 mm, depending on the length of the fibers used for the bristles.

The delivery tip of the invention can be made with longer bristles or with shorter bristles. For example, the delivery tip made with longer bristles is useful in applying compositions such as sealing agents that need to be painted onto tooth surfaces. The delivery tip made with shorter bristles is useful in delivering and agitating impression materials and other appropriate materials. The fiber bristle length for fibrous bristles 50 is in the range from about 0.3 mm to about 3 mm, preferably from about 0.5 mm to about 2 mm. In a preferred embodiment, the fiber bristle diameter is in the range from about 0.02 mm to about 0.2 mm, and more preferably in the range from about 0.06 mm to about 0.09 mm.

The fibrous bristles 50 are preferably constructed of reasonably soft fibers so as not to irritate target dental surfaces. Both natural and synthetic fibers may be used to form fibrous bristles 50. Suitable natural fibers include cotton fibers, while suitable synthetic fibers include nylon and polyester fibers. In addition, various injection moldable plastics can be employed to form the bristles using standard injection molding techniques.

The fibrous bristles 50 can be attached to the outer surface and/or rim of delivery tip 14 at distal end 34 by various methods. One method is by adhesive attachment of fibers to the outer periphery at the distal end of the delivery tip. An adhesive material is applied to the outer surface and/or rim of the delivery tip where fiber attachment is desired. An appropriate quantity of fibers is then contacted with the adhesive material on the delivery tip. The adhesive is allowed to harden, thereby securing the fibers to the outer periphery at the distal end of the delivery tip. Another method of fiber attachment is to sonically weld or bond the fibers to the outer periphery at the distal end of the delivery tip using standard ultrasonic welding or bonding techniques. A further method of fiber attachment is to use a thermoforming plastic material to make the delivery tip and to cause the fibers to electrostatically attach to the outer periphery at the distal end of the delivery tip. An additional method of fiber attachment is to injection mold the fibers onto the desired outer periphery area at the distal end of the delivery tip. In this method, the fibers and delivery tip are injection molded together from a plastic material so that the fibrous bristles are integrally formed on the outer surface and/or rim at the distal end of the delivery tip.

Figure 5 illustrates delivery tip 14 attached to syringe 10. When using delivery tip 14 with a delivery device such as syringe 10, plunger 22 is inserted into loading end 13 after dental composition 16 has been preloaded in syringe barrel 12. The plunger 22 is then advanced inwardly so that plunger head 26 presses against composition 16, thereby causing composition 16 to flow out of discharge end 15 of syringe barrel 12 and into passageway 42 of delivery tip 14. The composition 16 flows through passageway 42 of delivery tip 14 without obstruction since fibrous bristles 50 are disposed on the outer surface of nozzle 40. Thus, delivery tip 14 does not become clogged during delivery of composition 16 to a tooth surface.

As illustrated in Figure 6, delivery tip 14 may be removed from syringe 10 and replaced with a cap 60. The syringe barrel 12 may be marketed prefilled with composition 16 and sealed with cap 60. Alternatively, syringe barrel 12 may be filled with composition 16 by removing cap 60 and drawing the desired amount of composition 16 into syringe barrel 12 from an appropriate storage container. In addition, composition 16 can be loaded into syringe barrel 12 through loading end 13.

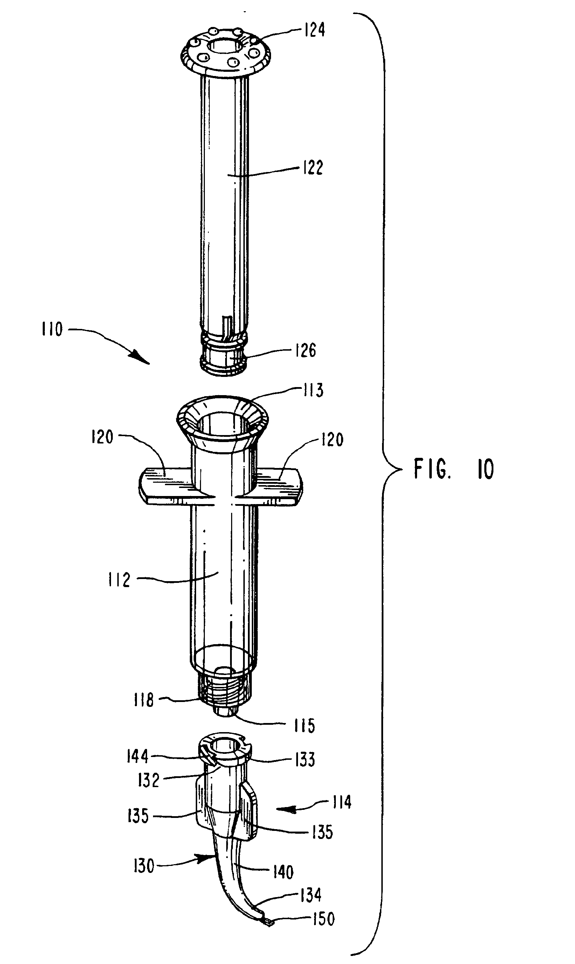

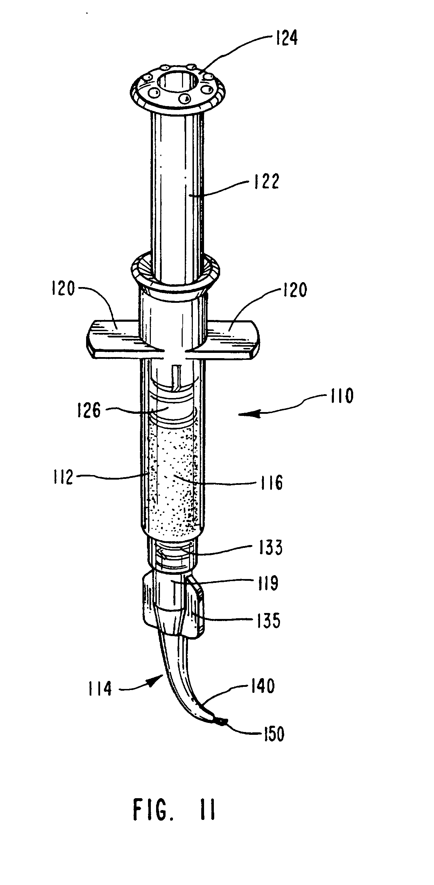

During use of syringe 10, cap 60 is removed from syringe barrel 12 and replaced with delivery tip 14. After composition 16 is applied to a tooth surface, delivery tip 14 is removed from syringe barrel 12 and discarded. The cap 60 is then replaced on syringe barrel 12, and syringe 10 is stored until the dental composition is needed in the future. If used properly, syringe barrel 12 should still be clean. Nevertheless, syringe barrel 12 may be disinfected if necessary. Referring to Figure 10, a perspective view of a syringe 110 and a delivery tip 114 in unassembled condition is illustrated according to an example and not belonging to the invention. The syringe 110 includes a reservoir means for holding a quantity of the dental composition. A preferred embodiment of the reservoir means is a hollow syringe barrel 112. The syringe barrel 112 has a loading end 113 and a discharge end 115. The syringe barrel 112 is generally cylindrical in shape and is adapted for holding a quantity of a dental composition 116 as shown in Figure 11. The dental composition can be any composition as discussed previously.

A pair of finger flanges 120 protrude from the outer surface of syringe barrel 112, which aid in gripping barrel 112 while dispensing the dental composition. The outer surface of syringe barrel 112 can also be provided with gradient markings (not shown) to aid in dispensing a precise amount of the dental composition.

The syringe 110 also includes a means for controlled dispensing of the dental composition from the reservoir means to the distal end of delivery tip 114 in order to control the flow of the dental composition onto tooth surfaces. In a preferred embodiment, the controlled dispensing means is a plunger 122 that is longitudinally slidable within syringe barrel 112. The plunger 122 has a circular flange 124 at the outer end thereof. A plunger head 126 is disposed at the opposite end of plunger 122 from circular flange 124. The plunger head 126 is constructed of a resilient material such that the outer edge of plunger head 126 is contiguous with the inner wall of syringe barrel 112. In addition, plunger head 126 is preferably constructed of a material that is nonreactive with the dental composition. Markings may be placed on plunger 122 to identify the volume of dental composition used or remaining.

The discharge end 115 of syringe barrel 112 includes a coupling means for attaching delivery tip 114 to syringe 110. The coupling means includes in one embodiment a syringe luer connector portion 118 that is complementary with a corresponding tip luer connector portion 144 on delivery tip 114 as discussed in greater detail below. Other means may also be used to attach delivery tip 114 to syringe barrel 112, which will also be discussed in further detail below.

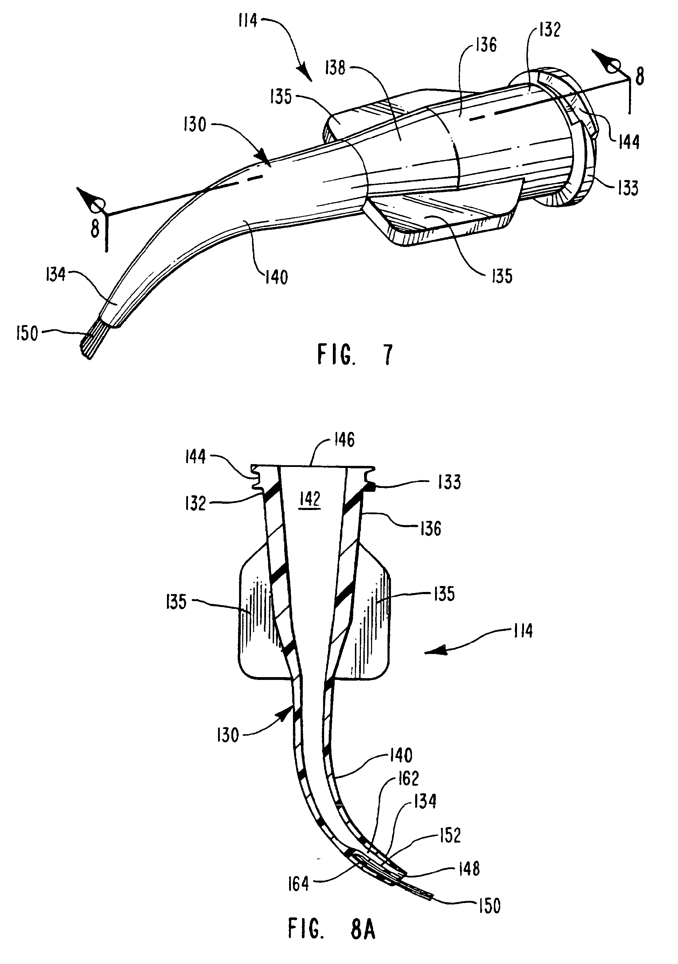

Figures 7-9 illustrate delivery tip 114 in greater detail. The delivery tip 114 includes a tubular member 130 having a proximal end 132 and a distal end 134. The tubular member 130 includes a cylindrical hub 136 toward proximal end 132, and a tapered nozzle 140 toward distal end 134. A conical section 138 is disposed between and integrally formed with hub 136 and nozzle 140. The outer diameter of delivery tip 114 thus gradually decreases in size from proximal end 132 to distal end 134. The nozzle 140 may be curved as shown, or straight.

A pair of fins 135 protrude from the outer surface of tubular member 130. The fins 135 provide convenience in attaching delivery tip 114 onto syringe barrel 112. A circular lip 133 surrounds the outer periphery of delivery tip 114 at proximal end 132. The lip 133 provides a fluid sealing surface to prevent leakage of the composition when delivery tip 114 is coupled to syringe barrel 112.

A coupling means for detachably coupling delivery tip 114 to syringe barrel 112 is provided at proximal end 132 of tubular member 130. One presently preferred embodiment of the coupling means includes syringe luer connector portion 118 on syringe barrel 112 that is complementary with tip luer connector portion 144 on delivery tip 114. It will be appreciated that the coupling means can be implemented using various other equivalent structures and be within the intended scope of the invention. For example, delivery tip 114 could be formed with male threads at proximal end 132 and discharge end 115 of syringe barrel 112 could be formed with complementary female threads or vice versa. Another connection arrangement that could be used is a press fit attachment of delivery tip 114 to syringe barrel 112. It is also possible within the scope of the invention to permanently secure delivery tip 114 to syringe barrel 112, in the same manner as discussed above in relation to delivery tip 14.

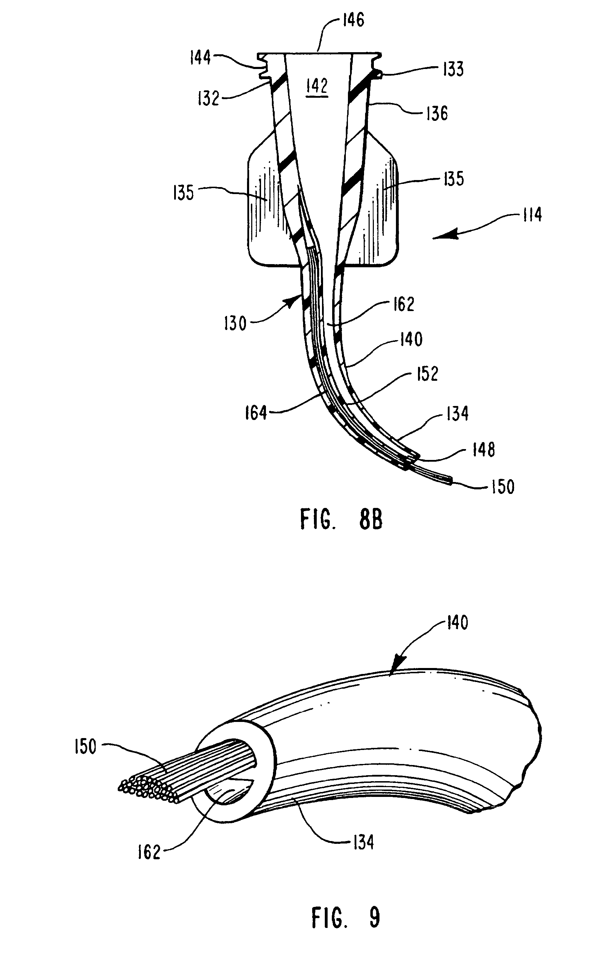

As illustrated in Figures 8A and 8B, the interior of delivery tip 114, not forming part of the invention forms a tapered passageway 142. The passageway 142 narrows from an inlet orifice 146 at proximal end 132 toward an outlet orifice 148 at distal end 134. The passageway 142 can be formed with any desired cross-sectional shape, such as circular, elliptical, square, rectangular, or polygonal. T h e passageway 142 of tubular member 130 is divided into a first lumen 162 and a second lumen 164 by an interior partition wall 152 disposed longitudinally within passageway 142. The first lumen 162 is open at both ends thereof such that first lumen 162 is confluent with inlet orifice 146 and outlet orifice 148 at distal end 134. Thus, a dental composition passes from inlet orifice 146 through first lumen 162 and exits outlet orifice 148 without obstruction. The second lumen 164 is preferably closed toward the proximal end of tubular member 130 to accommodate placement of a plurality of fibrous bristles 150, as discussed in greater detail below.

In the example of delivery tip 114 depicted in Figure 8A, second lumen 164 extends only a short distance within nozzle 140 before being terminated by interior partition wall 152. In the alternative embodiment of delivery tip 114 shown in Figure 8B, second lumen 164 extends into the cylindrical hub 136 of tubular member 130 before being terminated by interior partition wall 152. This causes first lumen 162 to be confluent with discharge end 115 of syringe barrel 112 when delivery tip 114 is attached thereto. It will be readily apparent that partition wall 152 can be formed to terminate second lumen 164 at any location along passageway 142 in other alternative embodiments of delivery tip 114.

The open first lumen 162 in delivery tip 114 enables the free flow of more viscous-type materials. For example, a viscous material is very difficult if not impossible to express using prior delivery tips, but yet is easily expressed through first lumen 162 of delivery tip 114.

A plurality of fibrous bristles 150 forming a brush are disposed within second lumen 164 and extend past outlet orifice 148. The bristles 150 are preferably constructed from materials forming soft fibers, such as the materials discussed above for bristles 50, which allow the dental composition to be applied to tooth surfaces without damaging the tooth surfaces. The fibrous bristles 150 in second lumen 164 may be held in place by frictional engagement with the interior walls of second lumen 164. The fibrous bristles 150 can also be attached to delivery tip 114 through various methods, such as adhesive attachment, electrostatic attachment, ultrasonic bonding, etc., as discussed above in relation to bristles 50 of delivery tip 14.

The fibers forming fibrous bristles 150 preferably have a length in the range from about 0.3 mm to about 25 mm. The fibrous bristles 150 extend a predetermined distance beyond the distal rim surrounding outlet orifice 148 of delivery tip 114 at distal end 134 when bristles 150 are permanently attached to delivery tip 114. Such a distance can be in the range from about 0.3 mm to about 3 mm. Preferably, the fiber bristle diameter is in the range from about 0.02 mm to about 0.2 mm, and more preferably in the range from about 0.06 mm to about 0.09 mm for bristles 150.

As shown in Figures 8A, 8B and 9, bristles 150 are tightly packed into second lumen 164, while first lumen 162 remains open. How tightly bristles 150 fit within second lumen 164 is largely a function of the bristle count and bristle diameter. The larger the bristle diameter, the fewer the bristles that will fit within second lumen 164 of delivery tip 114. When a frictional fit is utilized, bristles 150 extend within second lumen 164 a distance sufficient to engage the inner walls of second lumen 164 and hold bristles 150 in place. The bristles 150 are held in place due to friction among the bristles and with the interior walls of second lumen 164.

The distance bristles 150 extend beyond the distal edge of delivery tip 114 may be manually adjusted when a frictional fit is utilized, by allowing the dentist to either push the bristles further in or pull them further out. Such a manual adjustment capability is preferably utilized with the embodiment shown in Figure 8B, wherein the bristles are of a sufficient length and are disposed in second lumen 164 a sufficient distance so as not to be easily pulled out of delivery tip 114 when the adjustment is made. Adjusting the bristles gives the dentist even greater control in applying the dental composition. By pushing the bristles further within delivery tip 114, the dentist has more pin-point control in applying the composition. By pulling the bristles further out from the delivery tip, the dentist can cause the bristles to fan out to more accurately coat a larger tooth surface.

Figure 11 illustrates delivery tip 114 attached to syringe 110. When using delivery tip 114 with a delivery device such as syringe 110, plunger 122 is inserted into loading end 113 after dental composition 116 has been preloaded in syringe barrel 112. The plunger 122 is then advanced inwardly so that plunger head 126 presses against composition 116, thereby causing composition 116 to flow out of discharge end 115 of syringe barrel 112 and into passageway 142 of delivery tip 114. The composition 116 flows through passageway 142 and first lumen 162 without obstruction since fibrous bristles 150 are disposed in second lumen 164. Thus, delivery tip 114 does not become clogged during delivery of composition 116 to a tooth surface.

Delivery tip 114 may be removed from syringe 110 and replaced with a cap as discussed above in relation to delivery tip 14. Thus, the syringe barrel 112 may be marketed prefilled with composition 116 and sealed with a cap, or syringe barrel 112 may be filled with composition 116 by drawing the desired amount of the composition into syringe barrel 112 from an appropriate storage container.

Substantially enhanced delivery of a dental composition is accomplished by the delivery tip of the present invention. For example, delivery of a viscous composition, which may or may not be viscous due to a filler, is virtually impossible to express through prior delivery tips which have bristles disposed within the passageway of the tips. Such a viscous composition is easily expressed through the open passageway or lumen of the delivery tip of the present invention and any filler particles in the composition are not filtered out.

The delivery tip of the invention can be constructed of a rigid plastic material, as well as other suitable materials such as metal or glass. The delivery tip can also be made with a combination of materials. For example, cylindrical hubs 36 and 136 can be made from a plastic material, while nozzles 40 and 140 can be made from a metallic material or vice versa.

It is important that the components of the delivery tip and the delivery device such as a syringe be constructed of materials that will not react with a dental composition used therewith. In addition, the dental composition should not adhere to the construction materials used. Since many dental compositions are light sensitive, the construction materials used may be light-resistive. For example, various colored plastics that tend to filter out light can be employed in making the delivery tip and syringe.

In addition, different colored plastics may be used to identify the type of dental composition within the syringe. Alternatively, printing or other identifying markings on the syringe may be used to identify the type of dental composition therein.

Although the above discussion has described an apparatus used for applying dental compositions to tooth surfaces, it will be appreciated that the apparatus of the present invention may be adapted for applying other materials to various surface types.

A method for delivery of a dental composition to tooth surfaces using the delivery tip of the present invention includes loading and holding a quantity of the dental composition in a reservoir such as a syringe barrel. The dental composition is then delivered from the reservoir into the delivery tip coupled to the reservoir, such as by expelling the dental composition from the syringe barrel by depressing the plunger therein so as to force the dental composition into the delivery tip. The dental composition is then applied onto the tooth surface through the delivery tip. The dispensed dental composition on tooth surfaces can be agitated with the fibrous bristles of the delivery tip to remove entrapped air bubbles, to scrub the tooth structure, or to work the composition into the surrounding tissues. The fibrous bristles can also be used to coat and spread the dispensed dental composition on tooth surfaces.

The delivery tip of the invention is particularly useful for dispensing impression materials onto tooth surfaces. A problem that occurs when applying impression materials to tooth surfaces with conventional delivery devices is that air bubbles remain entrapped within the impression material. By agitating the dispensed impression material with the fibers at the distal end of the delivery tip, entrapped air bubbles are removed from the impression material.

The present invention may be embodied in other specific forms without departing from the scope of the claims. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A delivery tip (14) for applying a dental composition to a tooth surface, comprising:
a tubular member (30) having a proximal end (32) and a distal end (34), an outer periphery, an outlet orifice (48) at the distal end (34) and a distal rim surrounding said outlet orifice;
coupling means on (44) the proximal end for releasably attaching said tubular member to a delivery device for the dental composition; and
a plurality of fibrous bristles (50) disposed adjacent to the distal end, **characterized in that** and bristles are welded, bonded, adhesively attached, or integrally formed on at least one of said outer periphery or said distal rim so as to not obstruct said outlet orifice (48) and so as to permit contact with and delivery of a dental composition by means of said bristles.

2. The delivery tip of claim 1, wherein said tubular member (30) has a passageway (42) tapered from the proximal end to the distal end.

3. The delivery tip of claim 1, wherein said tubular member (30) includes a cylindrical hub (36) and a curved nozzle (40).

4. The delivery tip of claim 3, wherein said curved nozzle (40) facilitates precise application of the dental composition to the tooth surface.

5. The delivery tip of claim 1, wherein said coupling means comprises a threaded portion (44) formed on the proximal end (32) of the tubular member (30) that is complementary with a threaded portion (18) formed on a discharge end (15) of the delivery device.

6. The delivery tip of claim 1, wherein said coupling means (44) comprises a female Luer connector on the proximal end of said tubular member for coupling with a male Luer connector on a discharge end of the delivery device.

7. The delivery tip of claim 1, wherein said fibrous bristles (50) are disposed on and surround at least said distal rim at the distal end (34) of said tubular member (30), with at least a portion of said fibrous bristles extending a predetermined distance beyond the distal end.

8. The delivery tip of claim 7, wherein at least a portion of said fibrous bristles (50) extend beyond the distal end (34) of said tubular member (30) a distance in a range from about 0.3 mm to about 3 mm.

9. The delivery tip of claim 1, wherein each of said fibrous bristles (50) have a diameter in a range from about 0.02 mm to about 0.2 mm.

10. The delivery tip of claim 1, wherein each of said fibrous bristles (50) have a length in a range from about 0.3 mm to about 3 mm.

11. The delivery tip of claim 1, wherein said fibrous bristles (50) are constructed from natural or synthetic fibers.

12. The delivery tip of claim 11, wherein said fibrous bristles (50) are constructed from a material selected from the group consisting of nylon, polyester, and cotton.

13. The delivery tip of claim 1, wherein the tip (14) is constructed of a chemically inert material with respect to the dental composition.

14. The delivery tip of claim 1, wherein the fibrous bristles (50) are disposed on said outer periphery at said distal end of said tubular member (30).

15. The delivery tip of claim 1, wherein the fibrous bristles (50) are disposed in spaced apart clumps around said outer periphery at said distal end (34) of said tubular member (30).

## Patentansprüche

1. Abgabespitze (14) zum Aufbringen einer zahnmedizinischen Zusammensetzung auf eine Zahnoberfläche, umfassend:
ein rohrförmiges Teil (30) mit einem proximalen Ende (32) und einem distalen Ende (34), einem äußeren Umfang, einer Auslassöffnung (48) an dem distalen Ende (34) und einem distalen Rand, welcher die Auslassöffnung umgibt;
Kopplungsmittel (44) an dem proximalen Ende zum ablösbaren Anbringen des rohrförmigen Teils an einer Zuführungsvorrichtung für die zahnärztliche Zusammensetzung; und
eine Vielzahl von faserförmigen Borsten (50), welche benachbart zu dem distalen Ende angeordnet sind, **dadurch gekennzeichnet, dass** die Borsten an wenigstens einem von dem äußeren Umfang oder dem distalen Rand angeschweißt, gebunden, klebend angebracht oder integral ausgebildet sind, so dass sie die Auslassöffnung (48) nicht behindern und so dass sie einen Kontakt mit und eine Abgabe einer zahnärztlichen Zusammensetzung mittels der Borsten ermöglichen.

2. Abgabespitze nach Anspruch 1, wobei das rohrförmige Teil (30) einen von dem proximalen Ende zu dem distalen Ende verjüngten Durchgang (42) aufweist.

3. Abgabespitze nach Anspruch 1, wobei das rohrförmige Teil (30) ein zylindrisches Verbindungsstück (36) und eine gekrümmte Düse (40) beinhaltet.

4. Abgabespitze nach Anspruch 3, wobei die gekrümmte Düse (40) eine präzise Aufbringung der zahnärztlichen Zusammensetzung auf die Zahnoberfläche erleichtert.

5. Abgabespitze nach Anspruch 1, wobei das Kopplungsmittel einen Gewindeabschnitt (44) umfasst, welcher an dem proximalen Ende (32) des rohrförmigen Teils (30) ausgebildet ist, welcher komplementär zu einem Gewindeabschnitt (18) ist, der an einem Auslassende (15) der Abgabevorrichtung ausgebildet ist.

6. Abgabespitze nach Anspruch 1, wobei das Kopplungsmittel (44) einen weiblichen Luer-Verbinder an dem proximalen Ende des rohrförmigen Teils zur Kopplung mit einem männlichen Luer-Verbinder an einem Auslassende der Abgabevorrichtung umfasst.

7. Abgabespitze nach Anspruch 1, wobei die faserförmigen Borsten (50) an und herum um wenigstens den distalen Rand an dem distalen Ende (34) des rohrförmigen Teils (30) angeordnet sind, wobei wenigstens ein Abschnitt der faserförmigen Borsten sich um einen vorbestimmten Abstand über das distale Ende hinaus erstreckt.

8. Abgabespitze nach Anspruch 7, wobei wenigstens ein Abschnitt der faserförmigen Borsten (50) sich um einen Abstand in einem Bereich von ungefähr 0,3 mm bis ungefähr 3 mm über das distale Ende (34) des rohrförmigen Teils (30) hinaus erstreckt.

9. Abgabespitze nach Anspruch 1, wobei jede der faserförmigen Borsten (50) einen Durchmesser in einem Bereich von ungefähr 0,02 mm bis ungefähr 0,2 mm aufweist.

10. Abgabespitze nach Anspruch 1, wobei jede der faserförmigen Borsten (50) eine Länge in einem Bereich von ungefähr 0,3 mm bis ungefähr 3 mm aufweist.

11. Abgabespitze nach Anspruch 1, wobei die faserförmigen Borsten (50) aus natürlichen oder synthetischen Fasern aufgebaut sind.

12. Abgabespitze nach Anspruch 11, wobei die faserförmigen Borsten (50) aus einem Material aufgebaut sind, welches aus der Gruppe ausgewählt ist, die aus Nylon, Polyester und Baumwolle besteht.

13. Abgabespitze nach Anspruch 1, wobei die Spitze (14) aus einem bezüglich der zahnärztlichen Zusammensetzung chemisch inerten Material aufgebaut ist.

14. Abgabespitze nach Anspruch 1, wobei die faserförmigen Borsten (50) an dem distalen Ende des rohrförmigen Teils (30) an dem äußeren Umfang angeordnet sind.

15. Abgabespitze nach Anspruch 1, wobei die faserförmigen Borsten (50) an dem distalen Ende (34) des rohrförmigen Teils (30) in voneinander beabstandeten Büscheln angeordnet sind.

## Revendications

1. Embout de distribution (14) destiné à appliquer une composition dentaire à la surface d'une dent, comprenant ;
un élément tubulaire (30) comportant une extrémité proximale (32) et une extrémité distale (34), une périphérie extérieure, un orifice de sortie (48) au niveau de l'extrémité distale (34) et un rebord distal entourant ledit orifice de sortie,
un moyen d'accouplement (44) sur l'extrémité proximale destiné à fixer de façon amovible ledit élément tubulaire à un dispositif de distribution de la composition dentaire, et
une pluralité de soies fibreuses (50) disposées de façon adjacente à l'extrémité distale, **caractérisée en ce que** lesdites soies sont soudées, collées, fixées de manière adhérente ou formées de manière intégrée sur au moins l'un de ladite périphérie extérieure ou dudit rebord distal de sorte à ne pas obstruer ledit orifice de sortie (48) et de sorte à permettre un contact avec lesdites soies et la distribution d'une composition dentaire au moyen de celles-ci.

2. Embout de distribution selon la revendication 1, dans lequel ledit élément tubulaire (30) comporte un passage fuselé depuis l'extrémité proximale jusqu'à l'extrémité distale.

3. Embout de distribution selon la revendication 1, dans lequel ledit élément tubulaire (30) comprend un support cylindrique (36) et une buse incurvée (40).

4. Embout de distribution selon la revendication 3, dans lequel ladite buse incurvée (40) facilite une application précise de la composition dentaire sur la surface de la dent.

5. Embout de distribution selon la revendication 1, dans lequel ledit moyen d'accouplement comprend une partie filetée (44) formée sur l'extrémité proximale (32) de l'élément tubulaire (30) qui est complémentaire avec une partie filetée (18) formée sur une extrémité d'émission (15) du dispositif de distribution.

6. Embout de distribution selon la revendication 1, dans lequel ledit moyen d'accouplement (44) comprend un connecteur femelle de Luer sur l'extrémité proximale dudit élément tubulaire en vue d'un accouplement avec un connecteur mâle de Luer sur l'extrémité d'émission du dispositif de distribution.

7. Embout de distribution selon la revendication 1, dans lequel lesdites soies fibreuses (50) sont disposées sur ledit rebord distal au niveau de l'extrémité distale (34) dudit élément tubulaire (30) et entourent au moins celui-ci, au moins une partie desdites soies fibreuses se déployant d'une distance prédéterminée au-delà de l'extrémité distale

8. Embout de distribution selon la revendication 7, dans lequel au moins une partie desdites soies fibreuses (50) se déplole au-delà de l'extrémité distale (34) dudit élément tubulaire (30) d'une distance dans une plage allant d'environ 0,3 mm à environ 3 mm.

9. Embout de distribution selon la revendication 1, dans lequel chacune desdites soies fibreuses (50) présente un diamètre dans une plage allant d'environ 0,02 mm à environ 0,2 mm.

10. Embout de distribution selon la revendication 1, dans lequel chacune desdites soies fibreuses (50) présente une longueur dans une plage allant d'environ 0,3 mm à environ 3 mm.

11. Embout de distribution selon la revendication 1, dans lequel lesdites soies fibreuses (50) sont conçues à partir de fibres naturelles ou synthétiques.

12. Embout de distribution selon la revendication 11, dans lequel lesdites soies fibreuses (50) sont conçues à partir d'un matériau sélectionné à partir du groupe comprenant le nylon, le polyester et le coton.

13. Embout de distribution selon la revendication 1, dans lequel l'embout (14) est conçu en un matériau inerte d'un point de vue chimique par rapport à la composition dentaire.

14. Embout de distribution selon la revendication 1, dans lequel les soies fibreuses (50) sont disposées sur ladite périphérie extérieure au niveau de ladite extrémité distale dudit élément tubulaire (30).

15. Embout de distribution selon la revendication 1, dans lequel les soies fibreuses (50) sont disposées en touffes espacées autour de ladite périphérie extérieure au niveau de ladite extrémité distale (34) dudit élément tubulaire (30).
